Europäisches Patentamt

European Patent Office

Office européen des brevets

(19)

(11) EP 0 741 257 A1

## (12) DEMANDE DE BREVET EUROPEEN

(43) Date de publication:
06.11.1996 Bulletin 1996/45

(51) Int Cl.6: **F16H 61/16**, F16H 61/06

(21) Numéro de dépôt: 96400900.5

(22) Date de dépôt: 26.04.1996

(84) Etats contractants désignés:
**BE DE ES GB IT**

(30) Priorité: **05.05.1995 FR 9505387**

(71) Demandeur: **Société Anonyme dite: REGIE NATIONALE DES USINES RENAULT
92109 Boulogne Billancourt (FR)**

(72) Inventeur: **Mercier, Jacques
75015 Paris (FR)**

(54) **Système de sécurité pour engagement en marche avant et en marche arrière d'une transmission automatique**

(57) Transmission automatique comportant une vanne manuelle (VM) disposant d'une position de marche avant D et d'une position de marche arrière R, un organe de contrôle de prise de marche avant et un organe de contrôle de prise de marche arrière, ces organes ayant leurs pistons de commande (D) et (R) alimentés ou mis à la bâche au travers de la vanne manuelle (VM), selon ses positions respectives D ou R. Un système de sécurité avec tiroir (S) évite l'engagement en marche arrière si on roule encore en marche avant à une vitesse trop grande. Le système de contrôle comporte un tiroir de progressivité (P) à deux états contrôlant l'alimentation d'un accumulateur (A) commun pour les deux pistons d'embrayage.

FIG.1

**Description**

La présente invention se rapporte à la commande électro-hydraulique des transmissions automatiques.

Les transmissions automatiques comportent, quels que soient leurs composants, un système de commande interne lié au levier situé dans l'habitacle à portée du conducteur et comportant au moins les positions repérées traditionnellement par R, N, D correspondant respectivement à la marche arrière, au neutre et à la marche avant, l'élément essentiel du système de commande interne étant une vanne, dit vanne manuelle. En position neutre N, la transmission est ouverte. Le passage de N en R ou D met en action, par l'intermédiaire de la vanne manuelle, l'organe de contrôle (frein ou embrayage) nécessaire pour assurer le fonctionnement en marche arrière ou en marche avant.

Un problème important à résoudre dans la commande des transmissions automatiques est d'obtenir le véhicule étant arrêté, une prise progressive en couple desdits organes de contrôle, pour avoir un engagement sans à coups.

Un autre problème à résoudre concerne la sécurité : en effet, il ne faut pas, si l'on roule encore en marche avant à une trop grande vitesse et que l'on place le levier de vitesses sur la position R, donc la vanne manuelle en positon R, qu'il y ait prise effective de la marche arrière mais que celle-ci ne soit autorisée qu'en-dessous d'un certain seuil de vitesse véhicule pour ne pas avoir un freinage brutal et une destruction éventuelle de la transmission. De la même façon, cette fonction doit aussi être assurée lorsqu'on roule en marche arrière et qu'on impose la marche avant, ou lorsqu'on tente un engagement N-D ou N-R quand la vitesse moteur est excessive.

L'invention vise à résoudre ces problèmes à l'aide d'un minimum de composants,

Elle concerne un système de sécurité pour engagement en marche avant et en marche arrière d'une transmission automatique comportant une vanne manuelle VM disposant d'une position de marche avant D et d'une position de marche arrière R, un organe de contrôle de prise de marche avant , un organe de contrôle de prise de marche arrière, ces organes ayant leurs pistons de commande D et R alimentés ou mis à la bâche au travers de la vanne manuelle VM, selon ses positions respectives D ou R.

De façon préférentielle, deux gicleurs $G_D$ et $G_R$ sont placés sur les circuits de commande respectifs des pistons de commande D et R, les rapports de sections des gicleurs $G_D$ et $G_R$ étant proches des la racine carrée des pressions $P_D$ et $P_R$, nécessaires aux engagements de la marche avant et de la marche arrière.

Selon une disposition particulière, ce système de sécurité peut comporter un absorbeur de débit unique A, alimenté à partir de l'aval des gicleurs $G_D$ et $G_R$, après sélection par la vanne manuelle, selon les positions D ou R.

D'autres caractéristiques et avantages de l'invention apparaîtront clairement à la lecture de la description suivante d'un mode de réalisation particulier de celle-ci, en liaison avec les dessins annexés, sur lesquels :

- la figure 1 illustre le système proposé, et
- la figure 2 correspond à une variante de celui-ci.

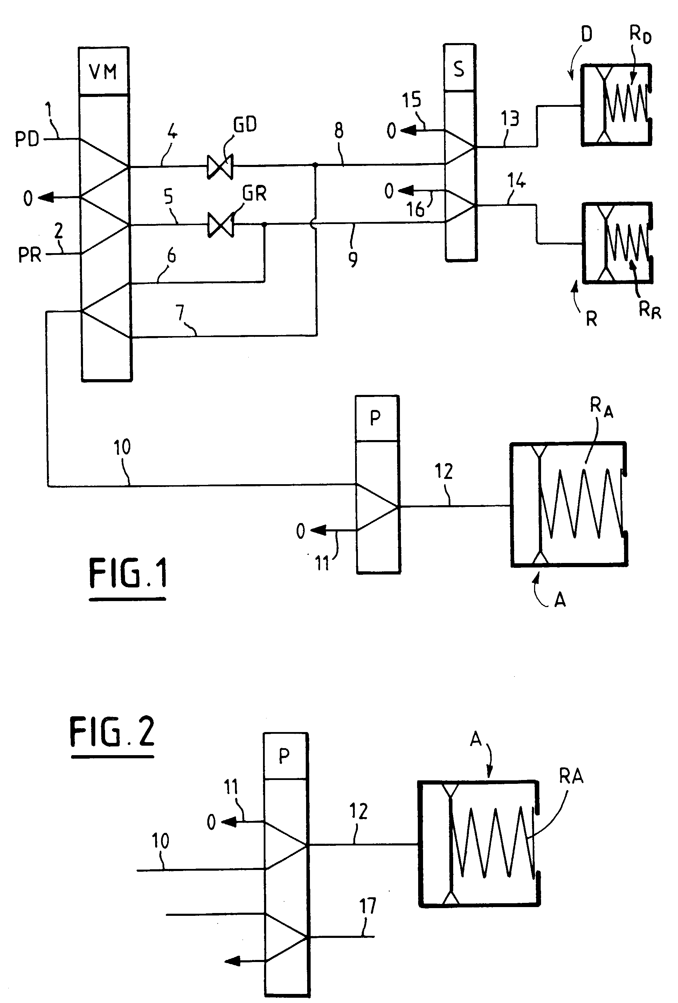

Comme l'indique la figure 1, l'architecture générale du système proposé comprend :

- une vanne manuelle VM ayant au moins deux positions notées R et D, et une position N,
- un tiroir de sécurité S commandé par une électrovanne tout ou rien non représentée, ayant donc deux positions notées S et $\overline{S}$, correspondant à l'état alimenté ou non de son électrovanne,
- un tiroir de progressivité P commandé par une électrovanne tout ou rien non représentée, lui aussi à deux états notés P et $\overline{P}$,
- un piston de commande D pour l'organe de contrôle de la marche avant,
- un piston de commande R pour l'organe de contrôle de la marche arrière,
- un absorbeur de débit A unique,
- les liaisons hydrauliques, numérotées de 1 à 16.

Conformément à l'invention, lorsque la vanne manuelle VM est en positon D, les conduits 1 et 4 sont reliés, ainsi que les conduits 3 et 5 et les conduits 10 et 7. En revanche, lorsque VM est en position R, les conduits 3 et 4 sont reliés, ainsi que les conduits 2 et 5 et les conduits 10 et 6.

Lorsque le tiroir de sécurité S est en position $\overline{S}$, les conduits 8 et 13 sont reliés ainsi que les conduits 9 et 14, tandis qu'en position S, les conduits 15 et 13 sont reliés, ainsi que les conduits 16 et 14.

Enfin, lorsque le tiroir de progressivité P est en position $\overline{P}$, les conduits 11 et 12 sont reliés, alors qu'en position P, 10 et 12 sont reliés.

Conformément à l'invention :

- le conduit 1 est alimenté par la pression de marche avant $P_D$,
- le conduit 2 est alimenté par la pression de marche arrière $P_R$ (qui peut être différente de $P_D$),
- les conduits 3, 11, 15 et 16, sont reliés à la bâche.
- le conduit 4 comporte un gicleur $G_D$ de marche avant,
- le conduit 5 comporte un gicleur $G_R$ de marche arrière, le rapport des sections des gicleurs $G_R$ et $G_D$ étant proche de la racine carrée du rapport des pressions $P_D$ et $P_R$,
- le piston D comporte un ressort de rappel $R_D$ travaillant entre la position de repos et la position organe D serré, relativement souple sur cette faible course (de l'ordre de quelques millimètres), son tarage étant tel qu'il corresponde sensiblement à 1 bar de pression,

- le piston R comporte un ressort de rappel $R_R$ dont le tarage est également proche de 1 bar de pression,
- l'absorbeur de débit A comporte un ressort de rappel $R_A$, relativement raide pour assurer une montée en pression progressive, son tarage initial étant égal ou très légèrement inférieur à celui de $R_D$ et $R_R$, c'est-à-dire correspondant à une pression proche de 1 bar.

La figure 2 représente une variante de la figure 1, selon laquelle le tiroir P est inversé c'est à dire qu'en position $\bar{P}$, les conduits 10 et 12 sont reliés, alors qu'en position P, les conduits 11 et 12 sont reliés

Le système de commande illustré par la figure 1 est tel qu'en régime établi, les tiroirs S et P sont dans l'état $\bar{S}$ et $\bar{P}$, pour avoir l'alimentation possible des pistons D et R, l'absorbeur étant relié à la bâche donc sans consommation de courant dans les électrovannes commandant les tiroirs S et P.

Pour le tiroir S, il est nécessaire d'être dans l'état $\bar{S}$ qui est celui de la position de sauvegarde, où toutes les électrovannes sont non alimentées.

La variante de la figure 2 prévoit que l'état établi soit en revanche S, P, donc avec consommation de courant sur l'électrovanne du tiroir P. Cette variante permet, dans l'état de sauvegarde $\bar{P}$, de moduler par une fuite contrôlée un état de pression dans un organe récepteur, pour rejoindre progressivement et sans à coup ledit état de sauvegarde depuis l'état initial, et quelque soit celui-ci, lorsque l'état de sauvegarde devient opératoire. Ce circuit est indiqué par la référence 17 sur la figure 2.

Selon la figure 1, dans l'état initial du système, la vanne manuelle est en position N, le tiroir de sécurité en position $\bar{S}$, et le tiroir de progressivité en position P. La séquence d'engagement d'un rapport de marche avant ou de marche arrière est alors la suivante :

a) passage de la vanne manuelle en D ou en R,
b) passage de P en $\bar{P}$,
c) si les conditions d'autorisation d'un engagement N-D ou N-R sont satisfaites, $\bar{S}$ reste en $\bar{S}$, sinon $\bar{S}$ passe en S, c'est-à-dire que l'engagement est inhibé.
d) quand la phase d'engagement transitoire est terminée $\bar{P}$ repasse en P.

La même séquence s'applique où la variante de la figure 2, en inversant simplement P et $\bar{P}$.

**Revendications**

1. Système de sécurité pour l'engagement en marche avant et en marche arrière d'une transmission automatique comportant une vanne manuelle (VM) disposant d'une position de marche avant D et d'une position de marche arrière R, un organe de contrôle de prise de marche avant et un organe de contrôle de prise de marche arrière, ces organes ayant leurs pistons de commande (D) et (R) alimentés ou mis à la bâche au travers de la vanne manuelle (VM), selon ses positions respectives D ou R, caractérisé en ce qu'il comporte un tiroir de progressivité (P) à deux états contrôlant l'alimentation d'un absorbeur de débit (A), et un tiroir de sécurité (S) à deux états, autorisant simultanément l'alimentation ou la mise à la bâche des deux récepteurs (D) et (R).

2. Système de sécurité selon la revendication 1, caractérisé en ce qu'il comporte deux gicleurs ($G_D$) et ($G_R$) placés sur les circuits de commande respectifs des pistons de commande (D) et (R), les rapports des sections des gicleurs ($G_D$) et ($G_R$) étant proches de la racine carrée des pressions ($P_D$) et ($P_R$), nécessaires aux engagements de la marche avant et de la marche arrière.

3. Système de sécurité selon la revendication 2, caractérisé en ce que l'absorbeur de débit (A) est alimenté à partir de l'aval des gicleurs ($G_D$) et ($G_R$), après sélection par la vanne manuelle (VM), selon ses positions D ou R.

4. Système de sécurité selon la revendication 3, caractérisé en ce qu'il comporte un tiroir de progressivité commandé (P) à deux états, interposé sur le circuit de l'absorbeur (A), pour le mettre hors d'état d'engagement.

5. Système de sécurité selon la revendication 3 ou 4, caractérisé en ce que les pistons de commande (D) et (R), et l'absorbeur (A) possèdent chacun un ressort de rappel ($R_D$, $R_R$, $R_A$), dont le tarage correspond pour chacun d'eux à une même valeur de pression sensiblement égale à un bar.

6. Système de sécurité selon l'une des revendications précédentes, caractérisé en ce que le tiroir de sécurité (S) est placé sur les circuits d'alimentation et des pistons de commande (D) et (R) en aval de ces derniers.

7. Système de sécurité selon la revendication 4, 5 ou 6, caractérisé en ce que le tiroir de progressivité (P) contrôle dans sa position de repos $\bar{P}$, une évolution lente de pression dans un organe récepteur, permettant de rejoindre l'état de sauvegarde de la transmission, lorsque celui-ci devient opératoire.

**FIG.1**

**FIG.2**

Office européen
des brevets

**RAPPORT DE RECHERCHE EUROPEENNE**

Numero de la demande

EP 96 40 0900

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 200 958 (AISIN-WARNER)<br>* page 2, alinéa 3 - page 4, alinéa 2; revendication 1; figure 1 *<br>--- | 1,6 | F16H61/16<br>F16H61/06 |
| A | DE-A-39 31 136 (AISIN AW CO.)<br>* revendication 1; figures 1,5 *<br>--- | 1,6 | |
| A | US-A-5 129 274 (VUKOVICH ET AL.)<br>* colonne 2, ligne 1 - colonne 3, ligne 33; revendication 1; figure 2 *<br>--- | 1,6 | |
| A | US-A-5 113 724 (HAYASAKI KOICHI) 19 Mai 1992<br>* colonne 2, ligne 26 - ligne 51; revendication 1; figure 1 *<br>----- | 1 | |

**DOMAINES TECHNIQUES RECHERCHES (Int.Cl.6)**

F16H

Le présent rapport a été établi pour toutes les revendications

| Lieu de la recherche | Date d'achèvement de la recherche | Examinateur |
|---|---|---|
| LA HAYE | 26 Juillet 1996 | Mende, H |